# EUROPÄISCHE PATENTSCHRIFT

(11) **EP 0 582 807 B1**
(45) Veröffentlichungstag und Bekanntmachung des Hinweises auf die Patenterteilung: **25.02.1998**
(21) Anmeldenummer: 93109660.6
(22) Anmeldetag: 17.06.1993
(51) Int. Cl.: G01G 13/04, B65G 53/52

(54) **Befüllen mit Rohrschleifenabscheider, insbesondere einer Behälterwaage**
Filling with pipe loop separator, especially of a hopper balance
Remplissage avec séparateur sous forme de boucle d'une conduite, en particulier pour une balance à réservoir

(30) Priorität: 13.08.1992 DE 4226700
(43) Veröffentlichungstag der Anmeldung: 16.02.1994
(73) Patentinhaber: FILTERWERK MANN & HUMMEL GMBH, D-71631 Ludwigsburg (DE)
(72) Erfinder: Brandauer, Otto, D-7130 Mühlacker (DE)
(74) Vertreter: Voth, Gerhard, Dipl.-Ing.

(56) Entgegenhaltungen:
- EP-A- 0 222 142
- EP-A- 0 468 399
- DE-A- 2 438 699
- DE-A- 3 412 920
- FR-A- 2 282 105

## Beschreibung

Die Erfindung betrifft eine Befüllvorrichtung und ein Verfahren zum Befüllen einer Behälterwaage, insbesondere mit einer Komnonente.

Derartige Verfahren sind bekannt, zum Beispiel als Verfahren der Dosierung mittels mechanischer Elemente.

Die Zuführung der Komponenten erfolgt mit mechanischen Dosierelementen, zum Beispiel Dosierschnecken oder Vibrationsrinnen. Dazu ist es notwendig, daß oberhalb der eigentlichen Behälterwaage sogenannte Arbeits- oder Tagesbehälter angeordnet werden, die in ihrem Volumen so ausgelegt sind, daß sie mehrere Teilchargen aufnehmen können. Das Dosierorgan in Form einer Schnecke übernimmt somit die Aufgabe des Austragens und Zudosierens der Komponenten und kann in Grob- und Feinstrom betrieben werden.

Diese Konfiguration benötigt einen relativ großen Platzbedarf des Arbeitsbehälters und damit verbunden einen hohen Investitionsaufwand für Behälter, notwendige Austragshilfseinrichtungen und Räumlichkeiten.

Weiter sind derartige Verfahren mit pneumatischer Befüllung bekannt.

Die Dosierung im Feinstrom ist dabei nicht beliebig klein und exakt zu steuern. Außerdem ist die Waage während der Befüllung teilweise unterschiedlichen Druckverhältnissen ausgesetzt. Darüber hinaus muß sie in der Regel einen Entlüftungsfilter zur Reinigung der Förderluft vom mitgeführten Material aufweisen.

Diese Filterelemente sind bei der Entleerung der Waage immer mit Reststaub gehaftet. Durch diese Faktoren wird die Genauigkeit der Verwiegung negativ beeinflußt.

Aus der DE-A 1-2 438 699 (FR-A-2 282 105) ist eine Dosiereinrichtung für pneumatische Förderanlagen bekannt, bei welcher eine Grob-und eine Feindosierung erfolgt.

Es ist Aufgabe der Erfindung eine Befüllvorrichtung, insbesondere zum Befüllen einer Behälterwaage zu schaffen, welche sowohl eine rasche Befüllung des Behälters, als auch eine genaue Dosierung ermöglicht. Diese Aufgabe wird durch die Merkmale des unabhängigen Anspruchs 1 gelöst.

Ein entsprechendes Verfahren ist im unabhängigen Anspruch 6 ausgegeben.

Ein Ausführungsbeispiel der Erfindung ist in den Zeichnungen dargestellt und wird im folgenden näher erläutert. Die Zeichnungen zeigen:

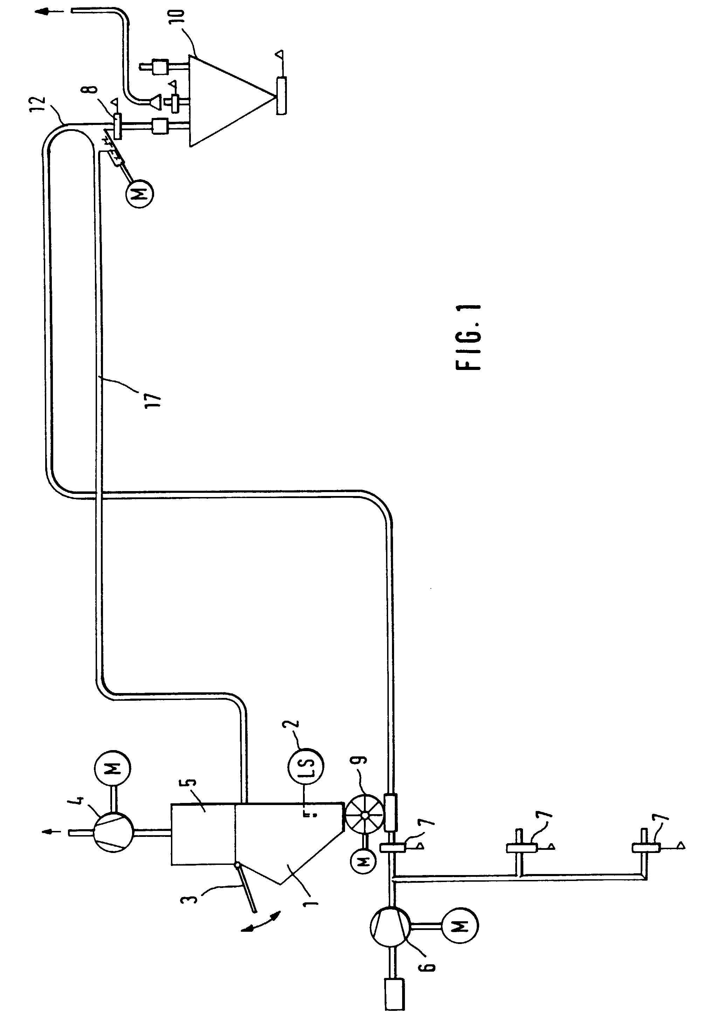

Fig. 1 ein Anlagenschema,

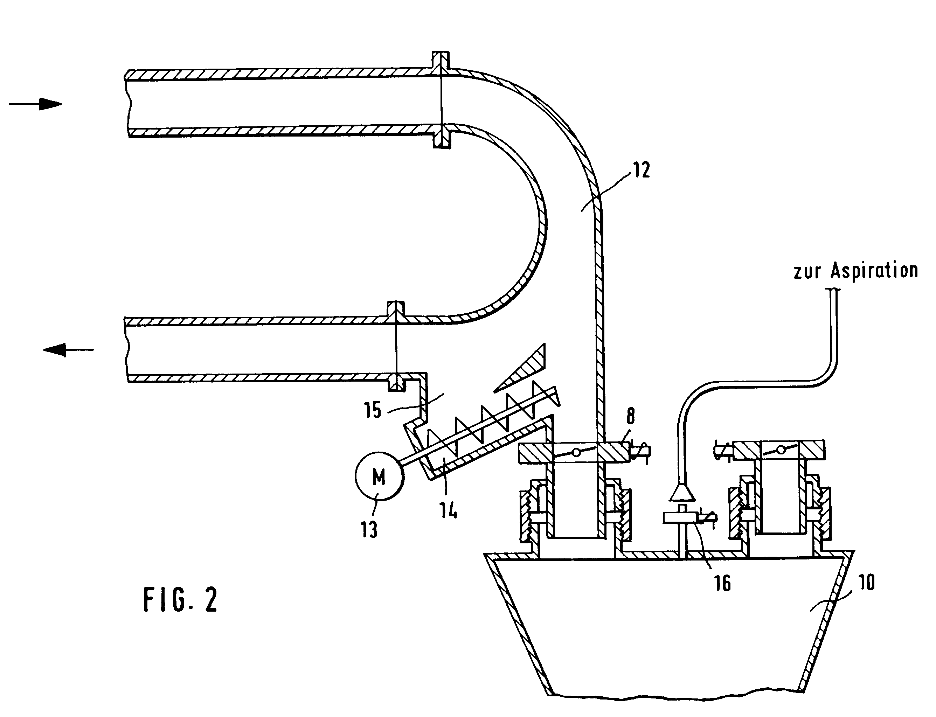

Fig. 2 eine Detaildarstellung.

Die Schüttgutkomponenten werden in einer Sackaufgabestation 1 eingefüllt, so daß ein Mindestvorrat an Material, signalisiert durch Füllungsmelder 2, für die Verwiegung bereitsteht. Dazu wird der schwenkbare Deckel 3 der Sackaufgabestation geöffnet und nach dem Befüllen geschlossen.

Während des Befüllvorganges wird durch eine Absaugventilator 4 über ein integriertes Filter 5 die Sackaufgabe aspiriert, so daß auch staubhaltiges Material ohne Staubauftritt aufgegeben werden kann.

Zur Erzeugung des Förderluftstromes wird ein Gebläse 6 eingesetzt, welches über die Klappe 7 auf die entsprechenden Komponenten aufgeschaltet werden kann. Das gesamte System wird über einen Dosierprozessor gesteuert. Zur Befüllung der Waage im Grobstrom wird das Absperrorgan 8 der entsprechenden Komponente geöffnet, die Klappe 7 in der Reinluftleitung geöffnet und das Gebläse 6 gestartet. Zeitverzögert wird die Schleuse 9 gestartet, und der Wiegebehälter wird im Grobstrom mit hoher Leistung pneumatisch befüllt, wobei der Förderluftstrom nicht in die Behälterwaage geführt wird, gleichzeitig füllt sich dabei Stauraum 15, der die Feindosierung mit Material versorgt. Die Triebkraft der pneumatischen Befüllung ist ein Druckgradient.

Bei einer frei wählbaren Gewichtsgröße vor Erreichen des Sollgewichtes wird der Grobstrom durch Abschalten der Schleuse ausgeschaltet und nach einer Nachlaufzeit das Gebläse abgeschaltet. Nun kann durch öffnen der Klappe 16 ein Druckausgleich in der Waage herbeigeführt werden, so daß das gesamte Wägesystem unter atmosphärischen Bedingungen arbeitet. Nun wird abermals die Klappe 8 geöffnet und über das Dosierorgan 14 in Feinstrom soviel Material zugewogen, daß das Sollgewicht exakt erreicht wird.

Dabei wird der Vorabschaltpunkt durch den Wägeprozessor nach jedem Dosiervorgang neu berechnet und optimiert. Nach Befüllung der ersten Komponente werden in gleicher Weise die weiteren Komponenten dosiert und die gesamte Rezeptur zusammengestellt.

Die vom Fördergut im Dosierelement 12 getrennte Förderluft ist staubhaltig und wird durch Rückführung in die Sackaufgabestation 1 über deren Filter 5 abgereinigt.

## Patentansprüche

1. Befüllvorrichtung, insbesondere zum Befüllen einer Behälterwaage (10) mit wenigstens einer Materialkomponente, mit wenigstens einem Element (12) für die grobe Befüllung und wenigstens einem Element (13,14) für die feine Befüllung, wobei beide Elemente an einer einzigen Einfüllöffnung angeordnet sind, welche ein Absperrorgan (8) aufweist, und wobei das Element für die grobe Befüllung ein pneumatisches Element und das Element für die feine Befüllung ein mechanisches Element ist, dadurch gekennzeichnet, daß das pneumatische Element ein Abscheider für das pneumatisch geförderte Material in Form eines Rohrschleifenabscheiders (12) ist.

2. Vorrichtung nach Anspruch 1, dadurch gekennzeichnet, daß das mechanische Element eine Schnecke (14) ist.

3. Vorrichtung nach Anspruch 1 oder 2, dadurch gekennzeichnet, daß für den Förderluftstrom eine Förderluftleitung (17) in den Aufgabebehälter (1) zurückführt und im Aufgabebehälter ein Filter (5) angeordnet ist.

4. Vorrichtung nach einem der Ansprüche 1 bis 3, dadurch gekennzeichnet, daß der Grobstrom im Saug- oder Druckbetrieb durchgeführt ist und der Feinstrom unter atmosphärischen Bedingungen in der Waage stattfindet.

5. Vorrichtung nach einem der Ansprüche 1 bis 4, dadurch gekennzeichnet, daß sie in einer Gesamtanlage derart integriert ist, daß der Förderluftstrom zurück in den Aufgabenbehälter führt und im Aufgabenbehälter (1) ein Filter (5) zur Reinigung vorgesehen ist.

6. Verfahren zum Befüllen einer Behälterwaage (10), insbesondere mit einer Komponente, wobei wenigstens ein Element (12) für die grobe Befüllung und wenigstens ein Element (13, 14) für die feine Befüllung betrieben wird, wobei zur Abscheidung des pneumatisch geforderten Materials während des Grobstromes ein Rohrschleifenabscheider (12) eingesetzt wird, wobei die pneumatische Befüllung im Saug- oder Druckbetrieb durchgeführt wird, wobei der Förderluftstrom an der Behälterwaage (10) vorbei geführt wird, wobei der Förderluftstrom in den Aufgabebehälter (1) geführt und mit einem Filter (5) abgereinigt wird.

## Claims

1. Filling apparatus, more especially for filling a hopper balance (10) with at least one material component, having at least one means (12) for coarse filling and at least one means (13, 14) for fine filling, wherein both means are disposed at a single filler opening which has a shut-off member (8), and wherein the means for the coarse filling is a pneumatic means, and the means for the fine filling is a mechanical means, characterised in that the pneumatic means is a separator for the pneumatically conveyed material in the form of a tubular loop-type separator (12).

2. Apparatus according to claim 1, characterised in that the mechanical means is a screw (14).

3. Apparatus according to claim 1 or 2, characterised in that, for the delivery air flow, a delivery air conduit (17) leads back into the feed tank (1) and a filter (5) is disposed in the feed tank.

4. Apparatus according to one of claims 1 to 3, characterised in that the coarse flow is accomplished in the suction or pressure operation, and the fine flow occurs under atmospheric conditions in the balance.

5. Apparatus according to one of claims 1 to 4, characterised in that it is incorporated in a general system so that the delivery air flow leads back into the feed tank, and a filter (5) is provided in the feed tank (1) for cleaning purposes.

6. Method of filling a hopper balance (10), more especially with one component, wherein at least one means (12) is operated for the coarse filling, and at least one means (13, 14) is operated for the fine filling, wherein a tubular loop-type separator (12) is used to separate the pneumatically conveyed material during the coarse flow, wherein the pneumatic filling is accomplished in the suction or pressure operation, wherein the delivery air flow is conducted past the hopper balance (10), and wherein the delivery air flow is conducted into the feed tank (1) and cleaned with a filter (5).

## Revendications

1. Dispositif de remplissage, en particulier d'une balance à réservoir (10), par au moins un composant propre aux matières, comprenant au moins un élément (12) assurant le remplissage grossier et au moins un élément (13, 14) assurant le remplissage fin, ces deux éléments étant montés sur un seul et même orifice de remplissage équipé d'un organe d'obturation, l'élément de remplissage grossier étant pneumatique tandis que l'élément de remplissage fin est mécanique,
caractérisé en ce que
l'élément pneumatique est un séparateur de la matière transportée pneumatiquement, ayant la forme d'un séparateur tubulaire à boucle (12).

2. Dispositif selon la revendication 1,
caractérisé en ce que
l'élément mécanique est une vis (14).

3. Dispositif selon la revendication 1 ou 2,
caractérisé en ce que
le courant d'air assurant le transport est ramené par une conduite (17) de retour au récipient d'alimentation (1) dans lequel est monté un filtre (5).

4. Dispositif selon l'une des revendications 1 à 3,
caractérisé en ce que
le courant de remplissage grossier alimente la balance pendant le fonctionnement en dépression ou en pression tandis que le courant de remplissage fin a lieu à la pression atmosphérique.

5. Dispositif selon l'une des revendications 1 à 4,
caractérisé en ce qu'
il est intégré à une installation globale, de manière que le courant d'air assurant le transport revienne au récipient d'alimentation (1) dans lequel est prévu un filtre épurateur (5).

6. Dispositif de remplissage d'une balance à réservoir (10), en particulier par un composant, dans lequel :
- au moins un élément (12) assure le remplissage grossier et au moins un élément (13, 14) assure le remplissage fin,
- la séparation du matériau pendant son transport par le courant d'air grossier est assurée par un séparateur tubulaire à boucle (12),
- le remplissage pneumatique est effectué par dépression ou par pression,
- le courant d'air assurant le transport passe devant la balance à réservoir (10), puis arrive au récipient d'alimentation (1) et est nettoyé par un filtre (5).
